# EUROPÄISCHE PATENTSCHRIFT

(11) **EP 1 535 778 B1**
(45) Veröffentlichungstag und Bekanntmachung des Hinweises auf die Patenterteilung: **06.08.2008**
(21) Anmeldenummer: 04078225.2
(22) Anmeldetag: 25.11.2004
(51) Int. Cl.: B60J 5/10

(54) **Abdeckklappe für die Griffmulde der Heckklappe von Kraftfahrzeugen**
Cover plate for the recessed grip of the rear door of vehicles
Plaque d'obturation pour l'alvéole de manoeuvre de l'hayon arrière de véhicules

(30) Priorität: 27.11.2003 DE 10356691
(43) Veröffentlichungstag der Anmeldung: 01.06.2005
(73) Patentinhaber: Volkswagen AG, 38436 Wolfsburg (DE)
(72) Erfinder: Siegel, Ulrich, 38444 Wolfsburg (DE)
(74) Vertreter: Schneider, Henry

(56) Entgegenhaltungen:
- DE-A1- 10 128 866
- DE-A1- 10 207 507
- DE-U1- 8 813 439

## Beschreibung

Die Erfindung betrifft eine Abdeckklappe für die Griffmulde der Heckklappe von Kraftfahrzeugen mit den im Oberbegriff des Anspruchs 1 genannten Merkmalen.

Es ist bei Kraftfahrzeugen allgemein bekannt, dass beim Auf- und Zuschließen der Vordertüren durch die Zentralverriegelung alle Türen und somit auch die Heckklappe und zwar in Abhängigkeit der Stellung des Schließzylinders der Heckklappe gemeinsam entoder verriegelt werden. Dabei kann das Ent- beziehungsweise Verriegeln durch Betätigung der Zentralverriegelung sowohl durch Funkfernbedienung als auch unter Anwendung eines herkömmlichen Fahrzeugschlüssels erfolgen. Unabhängig von der Zentralverriegelung kann die Heckklappe aber auch im Zusammenwirken des Fahrzeugschlüssels mit dem Schließzylinder der Heckklappe separat ent- oder verriegelt werden. Ist die Heckklappe entriegelt, so kann diese durch Ziehen eines in der Griffmulde der Heckklappe vorgesehenen Öffnungshebels geöffnet werden.

Sowohl für die Anordnung des Schließzylinders als auch für die Anordnung und Ausbildung der Griffmulde sind die vielfältigsten Anordnungen und Ausbildungen bekannt. Während bei einigen Fahrzeugtypen der Schließzylinder und die Griffmulde als voneinander getrennte Baugruppen oftmals mit relativ großem Abstand zueinander an den unterschiedlichsten Stellen der Heckklappe angeordnet sind, hat sich jedoch zunehmend eine Ausbildung durchgesetzt, bei der der Schließzylinder und die Griffmulde mit dem dieser zugeordneten Öffnungshebel eine Baugruppe bilden. Unabhängig von dieser aus dem Schließzylinder und der Griffmulde mit Öffnungshebel bestehenden Baugruppe, die in die Heckklappe integriert ist, dient die Heckklappe aber auch zur Aufnahme des Emblems des Fahrzeugherstellers.

Im Rahmen der ständigen Weiterentwicklung im Fahrzeugbau, so auch der aus dem Schließzylinder und der Griffmulde bestehenden Baugruppe, aber auch hinsichtlich der Anordnung des Emblems des Fahrzeugherstellers an der Heckklappe ist beispielsweise gemäß der DE 196 30 997 A1 eine aus einer Griffmulde, einem Öffnungshebel und aus einem Schließzylinder bestehende Ausbildung bekannt, in die gleichzeitig auch das Emblem des Fahrzeugherstellers integriert ist. Dabei wird von einer wiederum in der Heckklappe vorgesehenen Griffmulde ausgegangen, die neben dem Schließzylinder auch den Öffnungshebel aufnimmt, der in die Griffmulde eingelassen, am Gehäuse der Griffmulde verschwenkbar angelenkt und von Hand hintergreifbar ist. Während die Vorderfläche des Gehäuses und damit der Öffnungshebel in der Geschlossen-Stellung von einer Abdeckscheibe, die gleichzeitig das Emblem des Fahrzeugherstellers trägt, außen überdeckt ist, gibt die Abdeckscheibe in der Offen-Stellung den Öffnungshebel frei. Hierbei wird der Öffnungshebel, der die Funktion eines Griffes erfüllt, durch eine Schraubenfeder nach außen um eine Achse geschwenkt, so dass dieser von Hand leicht ergreifbar ist und somit mit dem Öffnungshebel die Heckklappe geöffnet werden kann, ohne umgreifen zu müssen. Wird nach der Betätigung die Abdeckscheibe zurück in die Geschlossen-Stellung gedreht, so wird der Öffnungshebel durch die Abdeckscheibe zurück in seine Innenstellung bewegt.

Mit einem eine Griffmulde bildenden Gehäuse in Form eines Einsatzes ist auch die Heckklappe nach der DE 102 07 507 A1 versehen. Dabei nimmt der Einsatz ebenfalls einen Schließzylinder auf und besitzt eine querverlaufende Schwenkachse, um die eine schwenkbar angeordnete, die Griffmulde abdeckende Abdeckklappe gelagert ist. Während der die Griffmulde bildende Einsatz in seinem oberen Bereich über Schraubverbindungen mit der Innenhaut und mittels Falzen mit der Außenhaut der Heckklappe und in seinem unteren Bereich mittels Falzen und Kleben mit der Außenhaut der Heckklappe verbunden ist, besitzt die Abdeckklappe in ihrem unteren Bereich ein Profil, das als Handhabe zum Öffnen der Heckklappe dient, wobei der obere Bereich der Abdeckklappe beim Öffnen der Heckklappe um die querverlaufende Schwenkachse in die Griffmulde hereingeschwenkt wird und dabei den Schließzylinder frei gibt. Auch bei dieser Ausbildung dient die Abdeckklappe gleichzeitig zur Aufnahme des Emblems des Fahrzeugherstellers.

Gemäß der DE 101 28 866 A1 ist auch eine Abdeckklappe bekannt. Dieses Dokument zeigt den Oberbegriff des Anspruchs 1.

Für die Verbindung des Emblems des Fahrzeugherstellers mit der die Griffmulde abdeckenden, um die querverlaufende Schwenkachse schwenkbar angeordneten Abdeckklappe ist eine Variante geeignet, bei der das Emblem des Fahrzeugherstellers einen Chromrand besitzt, über den die Verbindung des Emblems mit der Abdeckklappe mit den unterschiedlichsten bekannten Verbindungsmitteln vorgenommen werden kann. Nachteilig ist hierbei jedoch, dass der Chromrand des Emblems den optischen Eindruck stört, da die aus dem Emblem hervorgehende Marke durch den zusätzlichen Chromrand aufgeweicht und somit die Herkunftsaussage geschwächt wird.

Gemäß einer weiteren Variante kann die Verbindung des Emblems des Fahrzeugherstellers mit der Abdeckklappe auch dadurch erreicht werden, wenn ausgehend von einem Verzicht des den optischen Eindruck negativ beeinflussenden Chromrandes das nunmehr randlose Emblem durch Anwendung einer der diversen bekannten Schweißverfahren mit der Abdeckklappe verbunden wird. Das aber ist wieder mit dem Nachteil verbunden, dass zusätzlich eine Wärmequelle erforderlich ist, ein Materialfluss erfolgt und dabei die Qualitätsanforderungen an die Herstellung der Schweißnaht und deren Auswirkung auf das Außenhautteil der Heckklappe in ihrem unteren Bereich nicht immer erfüllt werden.

Der Erfindung liegt die Aufgabe zugrunde, eine Abdeckklappe für die Griffmulde der Heckklappe von Kraftfahrzeugen, in die gleichzeitig das Emblem des Fahrzeugherstellers integriert ist, entsprechend dem Oberbegriff von Anspruch 1 zu schaffen, die ausgehend von einem randlosen Emblem keinen negativen Einfluss auf den optischen Eindruck hinsichtlich der Herkunft des Herstellers des Kraftfahrzeugen hervorruft, und gleichzeitig bei der Integration mit dem Emblem nicht zu Oberflächenschäden am Außenhautteil der Heckklappe in ihrem unteren Bereich führt und somit hohen Qualitätsanforderungen gerecht wird.

Diese Aufgabe wird erfindungsgemäß durch eine Abdeckklappe mit den im Anspruch 1 genannten Merkmalen gelöst. Dadurch, dass die Abdeckklappe im Wesentlichen durch das Emblem des Fahrzeugherstellers gebildet ist, das dabei von einem vorzugsweise aus Druckguss bestehenden, eine Verbindung zwischen dem Karosserieteil und dem Schließzylinder herstellenden Befestigungsring aufnehmbar ist, der durch ein formschlüssiges Fügeverfahren mit einem, eine Abkantung besitzenden Ring verbunden ist, wird erreicht, dass unter Verwendung eines allgemein bekannten, den Verbraucher ansprechenden, randlosen Emblems ein negativer Einfluss auf den optischen Eindruck hinsichtlich der Herkunft des Herstellers des Kraftfahrzeugen vermieden wird und dabei die Integration des Emblems in die Abdeckklappe derart erfolgt, dass Oberflächenschäden am Außenhautteil der Heckklappe in ihrem unteren Bereich vermieden werden, so dass die Integration hohen Qualitätsanforderungen gerecht wird.

Weitere bevorzugte Ausgestaltungen ergeben sich aus den übrigen, in den Unteransprüchen genannten Merkmalen. Um ein formschlüssiges Fügen mit dem eine Abkantung besitzenden Ring zu ermöglichen, besitzt dabei der vorzugsweise aus Druckguss bestehende Befestigungsring einen Flansch, an dessen inneren Umfang sich auf der dem Emblem des Fahrzeugherstellers zu gerichteten Seite eine zylinderförmige Erweiterung anschließt. Dabei sollte der vorzugsweise aus Druckguss bestehende Befestigungsring vorteilhafterweise aus einer Zinklegierung bestehen.

In weiterer Ausbildung des vorzugsweise aus Druckguss bestehenden Befestigungsringes besitzt der Flansch des Befestigungsringes an seinem äußeren Umfang gleichmäßig verteilt angeordnete, mit Gewindebohrungen versehene Ausformungen, wobei es zweckmäßig ist, wenn an dem vorzugsweise aus Druckguss bestehenden Befestigungsring drei ungleich versetzt zueinander angeordnete, mit Gewindebohrungen versehene Ausformungen vorgesehen sind.

Die Abkantung des Ringes, der durch ein formschlüssiges Fügeverfahren mit dem vorzugsweise aus Druckguss bestehenden Befestigungsring zu verbinden ist, ist bei der erfindungsgemäß ausgebildeten Abdeckklappe unter Berücksichtigung der Integration des Emblems des Fahrzeugherstellers in diese durch einen Flansch gebildet.

Ausgehend von der Ausbildung sowohl des vorzugsweise aus Druckguss bestehenden Befestigungsringes als auch des eine Abkantung besitzenden Ringes ist das formschlüssige Fügen des Befestigungsringes mit dem eine Abkantung besitzenden Ring durch ein prozesssicheres Falzen herbeiführbar. Dabei ist die als Flansch ausgebildete Abkantung des Ringes an den vorzugsweise aus Druckguss bestehenden Befestigungsring andrückbar.

Die Befestigung des Emblems des Fahrzeugherstellers an dem vorzugsweise aus Druckguss bestehenden Befestigungsring kann durch die verschiedenartigsten, an sich bekannten Verbindungsmittel erfolgen. Vorteilhaft ist es jedoch, wenn die Verbindung durch Falzen erfolgt.

Das prozesssichere Falzen zur Verbindung des vorzugsweise aus Druckguss bestehenden Befestigungsringes mit dem eine Abkantung besitzenden Ring erfolgt zweckmäßigerweise durch das Kraftpaket einer an sich bekannten Falz-Vorrichtung, durch das ein Formstempel antreibbar ist, der die als Flansch ausgebildete Abkantung des Ringes an den vorzugsweise aus Druckguss bestehenden Befestigungsring andrückt. Bei der Durchführung des Falzvorganges und somit beim Andrücken der als Flansch ausgebildeten Abkantung des Ringes an den vorzugsweise aus Druckguss bestehenden Befestigungsring dient dieser gleichzeitig als Niederhalter. Somit kann nach Vornahme des prozesssicheren Falzens durch die Falz-Vorrichtung der vorzugsweise aus Druckguss bestehende Befestigungsring, nachdem auf diesen das Emblem des Fahrzeugherstellers aufgebracht ist, gemeinsam mit dem eine Abkantung besitzenden Ring zur Montage im Bereich der durch den Einsatz gebildeten Griffmulde der Heckklappe des Kraftfahrzeugen bereitgestellt werden.

Um eine den Anforderungen entsprechende Festigkeit und Dichtigkeit der Verbindung zwischen dem vorzugsweise aus Druckguss bestehenden Befestigungsring und dem eine Abkantung besitzenden Ring zu gewährleisten, ist es vorteilhaft, wenn vor der Durchführung des formschlüssigen Fügeverfahrens auf den eine Abkantung besitzenden Ring ein Kleber aufgebracht wird.

Nach einem weiteren Merkmal der Erfindung dient der vorzugsweise aus Druckguss bestehende, das Emblem des Fahrzeugherstellers aufnehmende Befestigungsring in seinem unteren Bereich in Verbindung mit dem Öffnen der Heckklappe gleichzeitig als Handhabe zum Schwenken der die Griffmulde abdeckenden, durch das Emblem des Fahrzeugherstellers gebildeten Abdeckklappe.

Schließlich ist der vorzugsweise aus Druckguss bestehende, das Emblem des Fahrzeugherstellers aufnehmende Befestigungsring mit der Schwenkachse verbunden, die in dem die Griffmulde bildenden Einsatz gelagert ist und um die das Emblem des Fahrzeugherstellers und damit die Abdeckklappe schwenkbar ist, so dass das Emblem des Fahrzeugherstellers gleichzeitig Öffner für die Heckklappe ist.

Die Erfindung wird nachfolgend anhand eines Ausführungsbeispieles näher erläutert. Es zeigen:
- Figur 1: einen Schnitt der Abdeckklappe, die im Wesentlichen durch das Emblem des Fahrzeugherstellers gebildet ist, im Bereich der Griffmulde der Heckklappe eines Kraftfahrzeuges;
- Figur 2: eine perspektivische Darstellung der Abdeckklappe nach Figur 1;
- Figur 3: eine Draufsicht auf einen dem Emblem des Fahrzeugherstellers und damit der Heckklappe zugeordneten Befestigungsring und
- Figur 4: eine Draufsicht auf einen mit dem Befestigungsring nach Figur 3 verbundenen weiteren Ring.

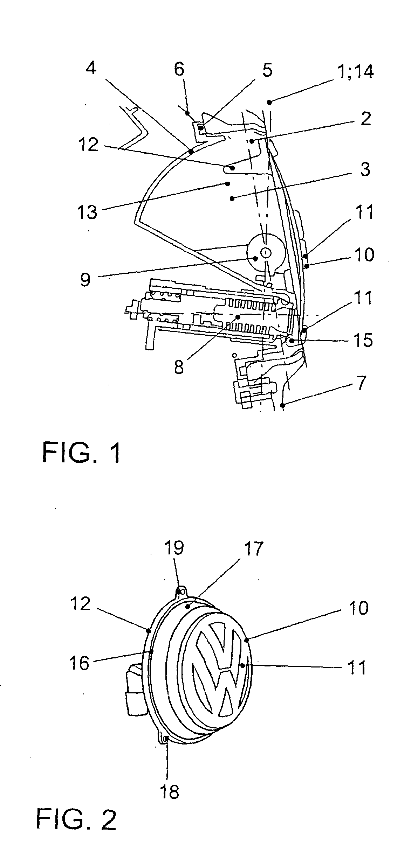

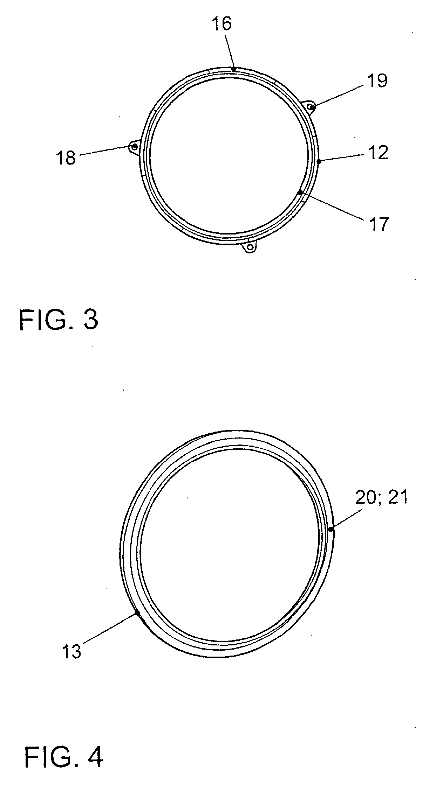

Gemäß Figur 1 ist im unteren Bereich einer Heckklappe 1 eines Kraftfahrzeuges über eine Öffnung 2 eine Griffmulde 3 zugänglich, die durch den Einsatz 4 gebildet ist. Dabei steht der Einsatz 4 in seinem oberen Bereich über Schraubverbindungen 5 mit der Innenhaut 6 und beispielsweise mittels Laserschweißung mit der Außenhaut 7 der Heckklappe 1 in Verbindung. Im unteren Bereich des Einsatzes 4 erfolgt eine Verbindung des Einsatzes 4 mit der Außenhaut 7 der Heckklappe 1 ebenfalls mittels Laserschweißung. Der Einsatz 4 nimmt nicht nur einen Schließzylinder 8 auf, sondern auch eine querverlaufende Schwenkachse 9, die in dem die Griffmulde 3 bildenden Einsatz 4 gelagert ist. Mit der querverlaufenden Schwenkachse 9 steht eine die Öffnung 2 der Griffmulde 3 abdeckende Abdeckklappe 10 in Verbindung, die durch das Emblem 11 des Fahrzeugherstellers gebildet ist. Dabei wird das Emblem 11 des Fahrzeugherstellers von einem aus Zinkdruckguss bestehenden Befestigungsring 12 aufgenommen, der durch ein formschlüssiges Fügeverfahren mit einem weiteren Ring 13 (Figur 4) verbunden ist, wobei vor dem Fügen auf den Ring 13 zur Gewährleistung der Festigkeit und Dichtigkeit der Verbindung ein Kleber aufgebracht wird.

Somit stellt der aus Zinkdruckguss bestehende Befestigungsring 12 unmittelbar und zwar über die querlaufende Schwenkachse 9 eine Verbindung zur Heckklappe 1 und damit zu einem Karosserieteil 14 her und mittelbar zum Schließzylinder 8, indem dieser von dem Befestigungsring 12 und damit auch von dem Emblem 11 des Fahrzeugherstellers überdeckt wird. Soll die Heckklappe 1 geöffnet werden, so wird das die Abdeckklappe 10 bildende Emblem 11 des Fahrzeugherstellers über den aus Zinkdruckguss bestehenden Befestigungsring 12 um die querverlaufende Schwenkachse 9 in die Griffmulde 3 hereingeschwenkt und gibt dabei den Schließzylinder 8 frei. Als Handhabe zum Hereinschwenken des Emblems 11 des Fahrzeugherstellers in die Griffmulde 3 dient ein Profil 15, das im unteren Bereich des Befestigungsringes 12 angeordnet ist und selbstverständlich auch am Emblem 11 des Fahrzeugherstellers angeordnet sein kann.

Aus der in Figur 2 gezeigten perspektivischen Darstellung der Abdeckklappe 10, die durch das Emblem 11 des Fahrzeugherstellers gebildet ist, geht im Wesentlichen das Verhältnis der Maße des Emblems 11 zu denen des aus Zinkdruckguss bestehenden Befestigungsringes 12, auf dem das Emblem 11 befestigt ist, aber auch die Ausbildung des aus Zinkdruckguss bestehenden Befestigungsringes 12 hervor. Es ist ersichtlich, dass der aus Zinkdruckguss bestehende Befestigungsring 12 auf der dem Emblem 11 abgewandten Seite einen Flansch 16 besitzt, an dessen inneren Umfang sich eine in Richtung des Emblems 11 verlaufende zylindrische Erweiterung 17 anschließt. Dabei sind am äußeren Umfang des Flansches 16 drei ungleich versetzt zueinander angeordnete, Gewindebohrungen 18 aufweisende Ausformungen 19 vorgesehen.

Während der aus Zinkdruckguss bestehende Befestigungsring 12 auch aus Figur 3 hervorgeht, ist der durch ein formschlüssiges Fügeverfahren mit dem aus Zinkdruckguss bestehenden Befestigungsring 12 verbundene, eine Abkantung 20 besitzende Ring 13 aus Figur 4 ersichtlich. Dabei ist die Abkantung 20 des Ringes 13 als Flansch 21 ausgebildet. Wird der aus Zinkdruckguss bestehende Befestigungsring 12 mit dem Ring 13 durch ein formschlüssiges Fügen verbunden, so wird dieses durch ein prozesssicheres Falzen herbeigeführt, indem der Flansch 21 des Ringes 13 an den aus Zinkdruckguss bestehenden Befestigungsring 12 angedrückt wird. Bei diesem Verfahrensschritt kann der aus Zinkdruckguss bestehende Befestigungsring 12 gleichzeitig als Niederhalter dienen.

Ermöglicht wird das prozesssichere Falzen durch das Kraftpaket einer nicht weiter dargestellten Falz-Vorrichtung, durch das ein Formstempel antreibbar ist. Dieser drückt den Flansch 21 des Ringes 13 an den aus Zinkdruckguss bestehenden Befestigungsring 12 an. Damit wird durch die Erfindung eine durch das Emblem 11 des Fahrzeugherstellers gebildete Abdeckklappe 10 für die Griffmulde 3 der Heckklappe 1 von Kraftfahrzeugen bereitgestellt, durch die unter Einsatz des aus Zinkdruckguss bestehenden Befestigungsringes 12 und des mit diesem durch ein formschlüssiges Fügen verbundenen, einen Flansch 21 besitzenden Ringes 13 Oberflächenschäden an der Außenhaut 7 der Heckklappe 1 vermieden werden, so dass die Abdeckklappe 10, die durch das Emblem 11 des Fahrzeugherstellers gebildet ist, hohen Qualitätsanforderungen gerecht wird.

### BEZUGSZEICHENLISTE

- 1: Heckklappe
- 2: Öffnung
- 3: Griffmulde
- 4: Einsatz
- 5: Schraubverbindungen
- 6: Innenhaut
- 7: Außenhaut
- 8: Schließzylinder
- 9: querverlaufende Schwenkachse
- 10: Abdeckklappe
- 11: Emblem des Fahrzeugherstellers
- 12: aus Zinkdruckguss bestehender Befestigungsring
- 13: Ring
- 14: Karosserieteil
- 15: Profil
- 16: Flansch
- 17: zylindrische Erweiterung
- 18: Gewindebohrungen
- 19: Ausformungen
- 20: Abkantung
- 21: Flansch

## Patentansprüche

1. Abdeckklappe (10) für die Griffmulde (3) der Heckklappe (1) von Kraftfahrzeugen, in die das Emblem (11) des Fahrzeugherstellers integriert ist und die um eine querverlaufende Schwenkachse (9) gelagert ist sowie gleichzeitig als Griff zum Öffnen der Heckklappe (1) dient, wobei die Griffmulde (3), die einen Schließzylinder (8) aufnimmt, durch einen, in einer Öffnung (2) der Heckklappe (1) vorgesehenen Einsatz (4), der mit der Außenhaut (7) und/ oder der Innenhaut (6) der Heckklappe (1) beispielsweise über Schraubenverbindungen (5) verbunden ist, gebildet ist, **dadurch gekennzeichnet, dass** die Abdeckklappe (10) im Wesentlichen durch das Emblem (11) des Fahrzeugherstellers gebildet ist, das dabei von einem vorzugsweise aus Druckguss bestehenden, eine Verbindung zwischen dem Karosserieteil (14) und dem Schließzylinder (8) herstellenden Befestigungsring (12) aufnehmbar ist, der durch ein formschlüssiges Fügeverfahren mit einem, eine Abkantung (20) besitzenden Ring (13) verbunden ist.

2. Abdeckklappe nach Anspruch 1, **dadurch gekennzeichnet, dass** der vorzugsweise aus Druckguss bestehende Befestigungsring (12) einen Flansch (16) besitzt, an dessen inneren Umfang sich auf der dem Emblem (11) des Fahrzeugherstellers zu gerichteten Seite eine zylinderförmige Erweiterung (17) anschließt.

3. Abdeckklappe nach Anspruch 2, **dadurch gekennzeichnet, dass** der Flansch (16) des vorzugsweise aus Druckguss bestehenden Befestigungsringes (12) an seinem äußeren Umfang gleichmäßig verteilt angeordnete, mit Gewindebohrungen (18) versehene Ausformungen (19) besitzt.

4. Abdeckklappe nach Anspruch 3, **dadurch gekennzeichnet, dass** am äußeren Umfang des Flansches (16) des vorzugsweise aus Druckguss bestehenden Befestigungsringes (12) drei ungleich versetzt zueinander angeordnete, mit Gewindebohrungen (18) versehene Ausformungen (19) vorgesehen sind.

5. Abdeckklappe nach Anspruch 3 und 4, **dadurch gekennzeichnet, dass** der vorzugsweise aus Druckguss bestehende Befestigungsring (12) aus Zink besteht.

6. Abdeckklappe nach Anspruch 5, **dadurch gekennzeichnet, dass** die Abkantung (20) des Ringes (13) durch einen Flansch (21) gebildet ist.

7. Abdeckklappe nach Anspruch 6, **dadurch gekennzeichnet, dass** die Verbindung des vorzugsweise aus Druckguss bestehenden Befestigungsringes (12) mit dem eine Abkantung (20) besitzenden Ring (13) durch ein prozesssicheres Falzen herbeiführbar ist.

8. Abdeckklappe nach Anspruch 7, **dadurch gekennzeichnet, dass** bei dem prozesssicheren Falzen bei der Durchführung des formschlüssigen Fügeverfahrens zur Verbindung des vorzugsweise aus Druckguss bestehenden Befestigungsringes (12) mit dem eine Abkantung (20) besitzenden Ring (13) die als Flansch (21) ausgebildete Abkantung (20) des Ringes (13) an den vorzugsweise aus Druckguss bestehenden Befestigungsring (12) andrückbar ist.

9. Abdeckklappe nach Anspruch 8, **dadurch gekennzeichnet, dass** das prozesssichere Falzen zur Verbindung des vorzugsweise aus Druckguss bestehenden Befestigungsringes (12) mit dem eine Abkantung (20) besitzenden Ring (13) durch das Kraftpaket einer Falz-Vorrichtung durchführbar ist, durch das ein Formstempel antreibbar ist, der die als Flansch (21) ausgebildete Abkantung (20) des Ringes (13) an den vorzugsweise aus Druckguss bestehenden Befestigungsring (12) andrückt.

10. Abdeckklappe nach Anspruch 9, **dadurch gekennzeichnet, dass** beim Andrücken der als Flansch (21) ausgebildeten Abkantung (20) des Ringes (13) an den vorzugsweise aus Druckguss bestehenden Befestigungsring (12) dieser gleichzeitig als Niederhalter dient.

11. Abdeckklappe nach Anspruch 9 oder 10, **dadurch gekennzeichnet, dass** vor der Durchführung des formschlüssigen Fügeverfahrens zur Verbindung des vorzugsweise aus Druckguss bestehenden Befestigungsringes (12) mit dem eine Abkantung (20) besitzenden Ring (13) auf diesen ein Kleber aufgebracht ist.

12. Abdeckklappe nach einem oder mehreren der Ansprüche 1 bis 11, **dadurch gekennzeichnet, dass** der vorzugsweise aus Druckguss bestehende, das Emblem (11) des Fahrzeugherstellers aufnehmende Befestigungsring (12) in seinem unteren Bereich in Verbindung mit dem Öffnen der Heckklappe (1) gleichzeitig als Handhabe zum Schwenken der die Griffmulde (3) abdeckenden, durch das Emblem (11) des Fahrzeugherstellers gebildeten Abdeckklappe (10) dient.

13. Abdeckklappe nach Anspruch 12, **dadurch gekennzeichnet, dass** der vorzugsweise aus Druckguss bestehende, das Emblem (11) des Fahrzeugherstellers aufnehmende Befestigungsring (12) mit der Schwenkachse (9) verbunden ist, die in dem die Griffmulde (3) bildenden Einsatz (4) gelagert ist.

## Claims

1. Cover plate (10) for the recessed grip (3) of the tailgate (1) of motor vehicles, in which the emblem (11) of the vehicle manufacturer is integrated and which is mounted about a transversely running pivot spindle (9) and serves at the same time as a handle for opening the tailgate (1), wherein the recessed grip (3), which accommodates a lock cylinder (8), is formed by means of an insert (4) which is provided in an opening (2) in the tailgate (1) and is connected to the external skin (7) and/or the internal skin (6) of the tailgate (1), for example via screw connections (5), **characterized in that** the cover plate (10) is essentially formed by the emblem (11) of the vehicle manufacturer, which emblem can be accommodated by a fastening ring (12) which is preferably die cast, produces a connection between the body part (14) and the lock cylinder (8) and is connected by a positive-locking joining process to a ring (13) which has a bevelled edge (20).

2. Cover plate according to Claim 1, **characterized in that** the fastening ring (12) which is preferably die cast has a flange (16), the inner circumference of which is adjoined by a cylindrical widened portion (17) on the side facing the emblem (11) of the vehicle manufacturer.

3. Cover plate according to Claim 2, **characterized in that** the flange (16) of the fastening ring (12) which is preferably die cast has formations (19) which are distributed uniformly on its outer circumference and are provided with threaded holes (18).

4. Cover plate according to Claim 3, **characterized in that** three formations (19) which are offset in an unequal manner with respect to one another and are provided with threaded holes (18) are provided on the outer circumference of the flange (16) of the fastening ring (12) which is preferably die cast.

5. Cover plate according to Claims 3 and 4, **characterized in that** the fastening ring (12) which is preferably die cast is composed of zinc.

6. Cover plate according to Claim 5, **characterized in that** the bevelled edge (20) of the ring (13) is formed by means of a flange (21).

7. Cover plate according to Claim 6, **characterized in that** the connection of the fastening ring (12) which is preferably die cast to the ring (13) having a bevelled edge (20) can be brought about by means of a reliable folding process.

8. Cover plate according to Claim 7, **characterized in that**, during the reliable folding process when carrying out the positive-locking joining process to connect the fastening ring (12) which is preferably die cast to the ring (13) having a bevelled edge (20), the bevelled edge (20) of the ring (13), which bevelled edge is designed as a flange (21), can be pressed onto the fastening ring (12) which is preferably die cast.

9. Cover plate according to Claim 8, **characterized in that** the reliable folding process for connecting the fastening ring (12) which is preferably die cast to the ring (13) having a bevelled edge (20) can be carried out by means of the force package of a folding apparatus, which can be used to drive a shaping ram which presses the bevelled edge (20), which is designed as a flange (21), of the ring (13) against the fastening ring (12) which is preferably die cast.

10. Cover plate according to Claim 9, **characterized in that**, during the pressing of the bevelled edge (20), which is designed as a flange (21), of the ring (30) against the fastening ring (12) which is preferably die cast, said fastening ring serves at the same time as a holding-down means.

11. Cover plate according to Claim 9 or 10, **characterized in that**, before the positive-locking joining process to connect the fastening ring (12) which is preferably die cast to the ring (13) having a bevelled edge (20) is carried out, an adhesive is applied to said ring.

12. Cover plate according to one or more of Claims 1 to 11, **characterized in that** the fastening ring (12), which is preferably die cast and accommodates the emblem (11) of the vehicle manufacturer, serves at the same time in its lower region, in conjunction with the opening of the tail gate (1), as a handle for pivoting the cover plate (10) which covers the recess grip (3) and is formed by the emblem (11) of the vehicle manufacturer.

13. Cover plate according to Claim 12, **characterized in that** the fastening ring (12), which is preferably die cast and accommodates the emblem (11) of the vehicle manufacturer, is connected to the pivot spindle (9) which is mounted in the insert (4) which forms the recessed grip (3).

## Revendications

1. Plaque d' obturation (10) pour le creux de préhension (3) du hayon arrière (1) de véhicules automobiles, dans laquelle est intégré l'emblème (11) du fabricant du véhicule, qui est monté autour d'un axe de pivotement (9) s'étendant transversalement et qui sert en même temps de prise pour ouvrir le hayon arrière (1), le creux de préhension (3), qui reçoit un cylindre de fermeture (8), étant formé par un insert (4) prévu dans une ouverture (2) du hayon arrière (1), qui est connecté à l' habillage extérieur (7) et/ou à l' habillage intérieur (6) du hayon arrière (1), par exemple par des connexions vissées (5), **caractérisée en ce que** la plaque d'obturation (10) est formée essentiellement par l'emblème (11) du fabricant du véhicule, qui peut être reçu dans ce cas par une bague de fixation (12) de préférence en fonte coulée sous pression, constituant une connexion entre la partie de la carrosserie (14) et le cylindre de fermeture (8), qui est connectée par un procédé d'assemblage par engagement positif à une bague (13) possédant un rebord (20).

2. Plaque d'obturation selon la revendication 1, **caractérisée en ce que** la bague de fixation (12) se composant de préférence de fonte coulée sous pression présente une bride (16) sur la circonférence intérieure de laquelle se raccorde un élargissement cylindrique (17) du côté orienté vers l'emblème (11) du fabricant du véhicule.

3. Plaque d'obturation selon la revendication 2, **caractérisée en ce que** la bride (16) de la bague de fixation (12) se composant de préférence de fonte coulée sous pression présente des formations (19) pourvues d'alésages filetés (18), réparties uniformément sur sa circonférence extérieure.

4. Plaque d'obturation selon la revendication 3, **caractérisée en ce que** trois formations (19) pourvues d'alésages filetés (18), disposées de manière décalée inégalement les unes par rapport aux autres, sont prévues sur la circonférence extérieure de la bride (16) de la bague de fixation (12) se composant de préférence de fonte coulée sous pression.

5. Plaque d'obturation selon la revendication 3 et 4, **caractérisée en ce que** la bague de fixation (12) se composant de préférence de fonte coulée sous pression se compose de zinc.

6. Plaque d'obturation selon la revendication 5, **caractérisée en ce que** le rebord (20) de la bague (13) est formé par une bride (21).

7. Plaque d'obturation selon la revendication 6, **caractérisée en ce que** la connexion de la bague de fixation (12) se composant de préférence de fonte coulée sous pression à la bague (13) possédant un rebord (20) peut s'effectuer par un pliage par un processus sûr.

8. Plaque d'obturation selon la revendication 7, **caractérisée en ce que** dans le cas du pliage par un processus sûr, lors de la réalisation du procédé d'assemblage par engagement positif pour la connexion de la bague de fixation (12) se composant de préférence de fonte coulée sous pression à la bague (13) présentant un rebord (20), le rebord (20) de la bague (13) réalisé sous forme de bride (21) peut être pressé contre la bague de fixation (12) se composant de préférence de fonte coulée sous pression.

9. Plaque d'obturation selon la revendication 8, **caractérisée en ce que** le pliage par un processus sûr, pour la connexion de la bague de fixation (12) se composant de préférence de fonte coulée sous pression à la bague (13) présentant un rebord (20) peut être effectué par l' ensemble des forces d'un dispositif de pliage, par lequel une matrice de formage peut être entraînée, laquelle presse le rebord (20) de la bague (13) réalisé sous forme de bride (21) contre la bague de fixation (12) se composant de préférence de fonte coulée sous pression.

10. Plaque d'obturation selon la revendication 9, **caractérisée en ce que** lors de la pression du rebord (20) de la bague (13) réalisé sous forme de bride (21) contre la bague de fixation (12) se composant de préférence de fonte coulée sous pression, celle-ci sert simultanément de serre-flan.

11. Plaque d'obturation selon la revendication 9 ou 10, **caractérisée en ce qu'**avant la mise en oeuvre du procédé d'assemblage par engagement positif pour connecter la bague de fixation (12) se composant de préférence de fonte coulée sous pression à la bague (13) présentant un rebord (20), on applique une colle sur celle-ci.

12. Plaque d' obturation selon une ou plusieurs des revendications 1 à 11, **caractérisée en ce que** la bague de fixation (12) se composant de préférence de fonte coulée sous pression, recevant l'emblème (11) du fabricant du véhicule, dans sa partie inférieure en liaison avec l'ouverture du hayon arrière (1), sert simultanément de manette pour faire pivoter la plaque d'obturation (10) recouvrant le creux de préhension (3), formée par l'emblème (11) du fabricant du véhicule.

13. Plaque d'obturation selon la revendication 12, **caractérisée en ce que** la bague de fixation (12) se composant de préférence de fonte coulée sous pression, recevant l'emblème (11) du fabricant du véhicule, est connectée à l'axe de pivotement (9) qui est monté dans l'insert (4) formant le creux de préhension (3).
